(19) Europäisches Patentamt / European Patent Office / Office européen des brevets

(11) **EP 3 872 971 A1**

(12) **EUROPEAN PATENT APPLICATION**

(43) Date of publication:
01.09.2021 Bulletin 2021/35

(21) Application number: 20159781.2

(22) Date of filing: 27.02.2020

(51) Int Cl.:
**H02M 1/32** (2007.01)        **H02M 7/5387** (2007.01)
**H02M 1/12** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **Park, Ki-Bum**
**5405 Baden-Dättwil (CH)**
• **Pettersson, Sami**
**5405 Baden-Dättwil (CH)**

(74) Representative: **Kolster Oy Ab**
**Salmisaarenaukio 1**
**P.O. Box 204**
**00181 Helsinki (FI)**

(54) **GRID-TIED VOLTAGE SOURCE CONVERTER**

(57)     A three-phase voltage source converter with an output LCL filter, the converter comprising a current controller, which is adapted to receive for each phase a current reference i*, LCL filter capacitor voltage reference $v_f$*, measured output current i and measured LCL filter capacitor voltage $v_f$. The current controller comprises a predictive peak current controller and a current reference generator, wherein the current reference generator is adapted to produce a modified current reference i** which is fed to the predictive peak current controller. The predictive peak current controller comprises a reference corrector adapted to form a peak current reference i*** and a peak current controller, the peak current controller being adapted to produce a gate signal for controlling the switches of the converter based on the predicted slope compensation for the next switching cycle, a clock signal, the peak current reference i*** and the measured output current.

FIG 2

**Description**

FIELD OF THE INVENTION

The invention relates to voltage source converters, and particularly to voltage source converters with peak current control.

BACKGROUND OF THE INVENTION

As installation of renewables increases fast, low voltage ride through (LVRT) of the grid-tied converter is becoming more important due to their capability to improve grid safety and reliability. In low voltage ride through a grid-tied converter has to tolerate certain grid voltage sags and stay connected to the grid.

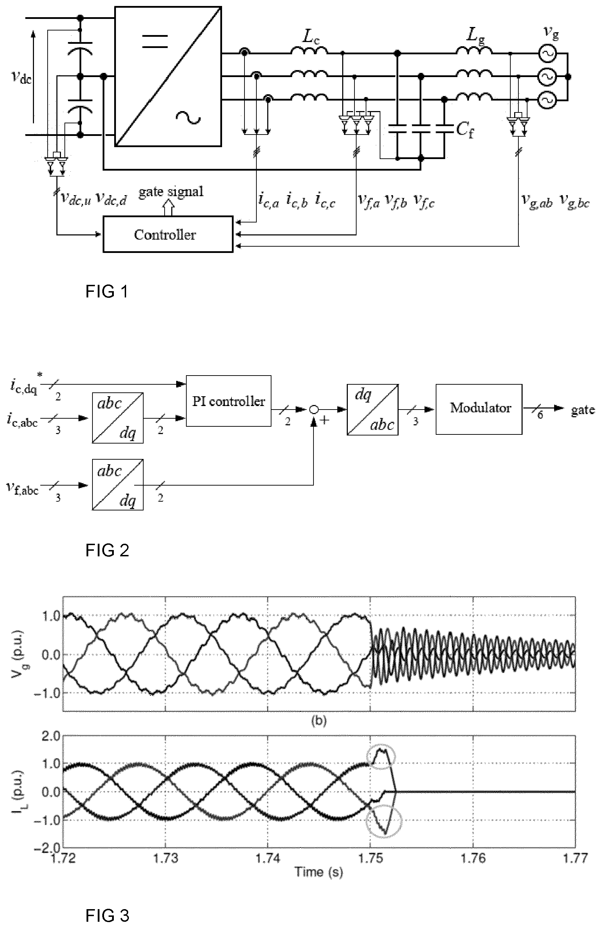

Three-phase voltage source converter (VSC) with an LCL filter shown in Figure 1 is the most widely used converter structure for grid connection. Typically, the converter-side current ic is measured and controlled to protect the semiconductors. In Figure 1, a controller produces gate signals which are conveyed to the gates of semiconductor switch components of the converter. The converter is a voltage source converter, having a DC-voltage vdc connected to the input. The converter is operated to generate a three phase voltage from the inputted DC voltage. The converter has an LCL filter which consists of inductances $L_c$ and $L_g$ and capacitors $C_f$. A virtual ground is formed with filter capacitors, as one end of the capacitors are connected together and this point is further connected to the midpoint of the input DC voltage. Figure 1 shows measurements $v_{dc,u}$, $v_{dc,d}$ from the DC-voltage which is split in two with capacitors. Further, measurement of output phase currents or converter currents $i_{c,a}$, $i_{c,b}$, $i_{c,c}$, filter capacitor voltages $v_{f,a}$, $v_{f,b}$, $v_{f,c}$ and grid voltages $v_{g,ab}$, $v_{g,bc}$ are provided to the controller.

Figure 2 shows the typical current control structure. PI controller in a synchronous dq frame or PR control in a stationary $\alpha\beta$ frame have been widely adopted. The current reference $i_{c,dq}{}^*$ is generated by the outer loop controller. Then, a linear controller followed by a modulator is used for current control of the converter. To improve the stability of the system and the start-up operation, active damping based on the filter capacitor voltage $v_f$ can be used.

Although the control during low voltage ride through have been extensively investigated, transient behaviours of the converter at the beginning of the fault have rarely been studied. Particularly, a peak current of the converter-side current $i_c$ is important since it causes additional stress to the semiconductor. In addition, the converter-side inductor $L_c$ needs to be designed not to saturate with the worst-case peak current.

Figure 3 shows an example of simulation waveform at the beginning of a voltage sag when a conventional linear controller is used. The upper plot of Figure 3 shows grid voltage waveforms and the lower plot shows the current to the grid. Since the grid voltage change is too fast for the controller to regulate the current, a severe current spike occurs. Usually, overcurrent protection threshold is determined to guarantee the safe operating area of the semiconductor. If this abrupt current spike triggers the protecting action, the converter stops operating.

For low voltage ride through operation, the converter needs therefore to go through a start-up operation again. Depending on applications, even a short time disconnection from the grid could cause severe damage to the system.

In order to achieve seamless operation of the converter during faults, an effective limitation of the converter current is necessary. Several solutions have been developed, such as maximum duty cycle limitation and hysteresis current control. The above solutions for limiting converter currents have certain drawback, such as sensitivity to model accuracy and uncontrolled harmonic spectrum.

In DC-DC power conversion applications peak current control is widely used because of the cycle-by-cycle peak current protection capability with fixed frequency operation. The turn-ON switching is triggered by a constant clock while the turn-OFF switching is triggered when the peak current reaches the current reference.

BRIEF DESCRIPTION OF THE INVENTION

An object of the present invention is thus to provide converter so as to overcome the above problems. The object of the invention is achieved by an inverter which is characterized by what is stated in the independent claim. The preferred embodiments of the invention are disclosed in the dependent claims.

The invention is based on the idea of manipulating the current reference fed to the converter and using a peak current controller in producing gate control signal for the switch components of the converter.

The converter of the invention is able to limit the output current to such values which are safe for the switching components and for other electrical components in the converter circuit. Even if the grid voltage suddenly drops, the converter of the invention does not produce currents which would exceed tolerable limits and cause overcurrent protective devices to trip. Thus the converter of the invention is usable in connection where the converter needs to stay connected to the grid even if the grid voltage suddenly drops.

BRIEF DESCRIPTION OF THE DRAWINGS

In the following the invention will be described in greater detail by means of preferred embodiments with reference to the attached [accompanying] drawings, in which

Figure 1 shows a general representation of a three-phase grid-tied voltage source converter;
Figure 2 shows controller structure applicable in connection with the converter of Figure 1;
Figure 3 shows simulated voltage and current waveforms in connection with a voltage sag;
Figure 4 shows a general representation of a control system of an embodiment;
Figure 5 shows single phase representations of LCL filter currents and voltages;
Figure 6(a) shows an implementation of a predictive peak current controller;
Figure 6(b) shows examples of blocks for generating separation between positive cycle and negative cycle for use in the controller of Figure 6(a) and current ripple prediction and compensating slope generation; and
Figure 7 shows an example of a timing diagram to be used in controlling a three phase converter.

DETAILED DESCRIPTION OF THE INVENTION

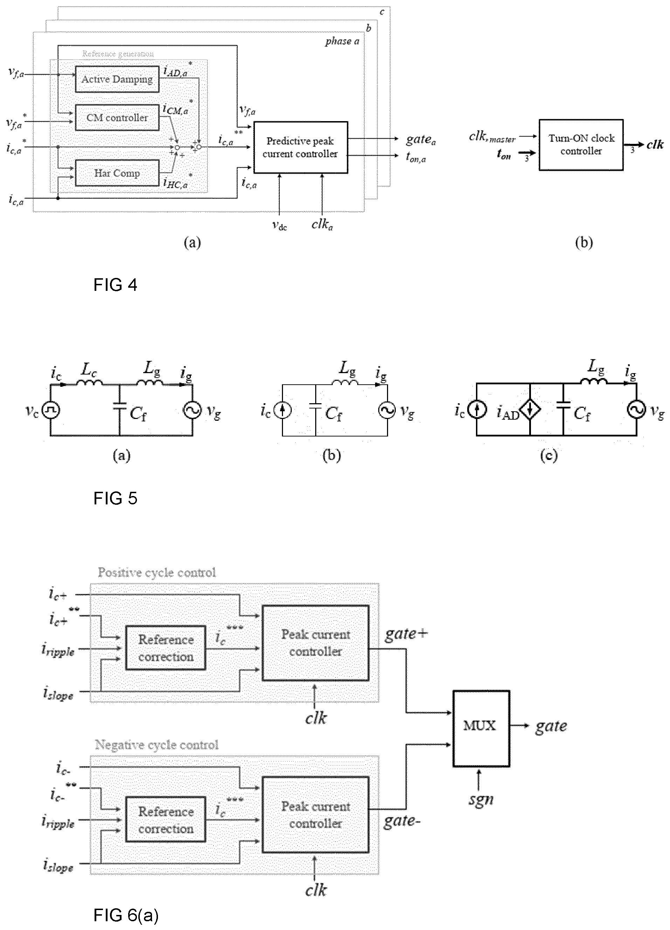

The overall control block diagram of the converter of the disclosure is shown in Figure 4, which is based on the circuit shown in Figure 1. It consists of the main current controller part and the turn-ON clock controller part. The converter-side current $i_c$ and the LCL filter capacitor voltage $v_f$ are measured. The main current controller is implemented per phase. It is divided into the predictive peak current controller and the current reference generation part, as shown in Figure 4(a). The current reference generation part may introduce active damping and in the preferred embodiments also common mode voltage controller and/or harmonic compensator.

The predictive peak current controller block carries out the current tracking task based on the current reference $i_{c,a}{}^{**}$. That is, all the control actions including the active damping and preferably also the common mode voltage injection and the harmonic compensation are achieved by adjusting $i_{c,a}{}^{**}$. Therefore, once the current reference $i_{c,a}{}^{*}$ is generated from the outer-loop controller, it is adjusted by adding the outputs of the other controllers, i.e. $i_{AD}{}^{*}$, $i_{CM}{}^{*}$, and $i_{HC}{}^{*}$, as presented in (1). As far as the operating frequencies of each controller is well separated as shown in Table I, these controllers do not interact with each other. Inputs to the predictive peak current controller shown in Figure 4 include also measured DC voltage $v_{DC}$ and clock signal $clk_a$, and filter capacitor voltage $v_{f,a}$ and measured converter voltage $i_{c,a}$. It is to be noted, that the structure in Figure 4 is presented for phase "a", and the values for phase "a" are indicated with subscript ",a".

$$i_c{}^{**} = i_c{}^{*} + i_{AD}{}^{*} + i_{CM}{}^{*} + i_{HC}{}^{*}$$
$$= i_c{}^{*} + G_{AD}v_f + G_{HC}\left(i_c{}^{*} - i_c\right) + G_{CM}\left(v_f{}^{*} - v_f\right)$$
$$(1)$$

Table I. Controllers for current reference generation

| Controller | Frequency range (Hz) |
|---|---|
| Common mode voltage controller (CMVC) | 150 (3rd harmonic) |
| Harmonic compensator (HC) | 250, 350, 550, 650, ... |
| Active damping (AD) | around the LCL filter resonant frequency |

In addition, the Turn-ON clock controller shown in Figure 4(b) is preferably used to align the three-phase gate signals in order to improve the high frequency spectrum. The Turn-ON clock controller receives as an input master clock information $clk_{master}$, that is a clock signal, and from each phase pulse ON duration time $t_{on}$. The output of the Turn-ON clock controller is the clock signal clk for each phase, such as the signal $clk_a$ presented in Figure 4(a).

In order to achieve a stable operation with an LCL filter, an active damping is also required for the peak current control similarly as in connection with conventional control schemes for an LCL filter. Figure 5(a) shows a single-phase representation of the system including an LCL filter with converter-side inductance $L_c$, filter capacitor $C_f$ and grid-side inductance $L_g$. If the converter-side current $i_c$ follows well the reference, $i_c$ can be considered as a current source which can be represented as shown in Figure 5(b). In this case, a resonance between $L_g$ and $C_f$ may occur. This resonance can be damped by injecting an additional damping current $i_{AD}$ as shown in Figure 5(c) based on the filter capacitor voltage information. The transfer function of the active damping, $G_{AD}$, is presented in (2), where $\omega_{res}$ is the filter resonance frequency. $G_{AD}$ provides the active damping action around $\omega_{res}$.

$$G_{AD}(s) = \frac{i_{AD}^*(s)}{v_f(s)} = \frac{k_{AD}\omega_{res}^2 s}{s^2 + 2\zeta\omega_{res}s + \omega_{res}^2} \qquad (2)$$

To mitigate low frequency harmonics, according to an embodiment, a harmonic compensator presented in (3) is added. The harmonic compensator is similar to a conventional harmonic compensation scheme. Here, $\omega_1$ is the fundamental angular frequency and the compensator produces harmonic compensation current $i_{HC}^*$.

$$G_{HC}(s) = \frac{i_{HC}^*(s)}{i_c^*(s) - i_c(s)} = \sum_{k \in \{1,5,7,...\}} \frac{\gamma_k s}{s^2 + k^2\omega_1^2} \qquad (3)$$

In order to inject a common mode voltage with the peak current controller, the filter capacitor voltage is controlled to follow the injected third harmonic voltage waveform by injecting a proper current $i_{CM}^*$ into the filter capacitor $C_f$. The common mode voltage controller presented in (4) is used in an embodiment of the invention, where $\omega_3$ is the third harmonic angular frequency.

$$G_{CM}(s) = \frac{i_{CM}^*(s)}{v_f^*(s) - v_f(s)} = k_{CM} + \frac{k_3\omega_3^2 s}{s^2 + 2\zeta\omega_3 s + \omega_3^2} \qquad (4)$$

The equations (2), (3), (4) can be solved with respect of the current reference $i_{AD}^*$, $i_{HC}^*$ and $i_{CM}^*$ which are shown in Figure 4(a). The current references are summed to the provided current reference $i_{c,a}^*$ to produce the modified current reference $i_{c,a}^{**}$ which is fed to a predictive peak current controller.

Figure 6(a) shows a block diagram for the predictive peak current control. The peak current direction changes in each positive and negative line cycle, i.e. always outwards. Here, this functionality is implemented with two peak current controllers as shown in Figure 6(a). Then, depending on the sign of the current reference a proper gate signal is selected, i.e. it is selected whether the voltage source converter switches the positive or the negative DC voltage to the phase output in question. The predictive peak current controller of Figure 6(a) consists of a reference correction block and of a conventional peak current control. It should be noted, that Figure 6(a) shows the structure for one phase of the three phase system.

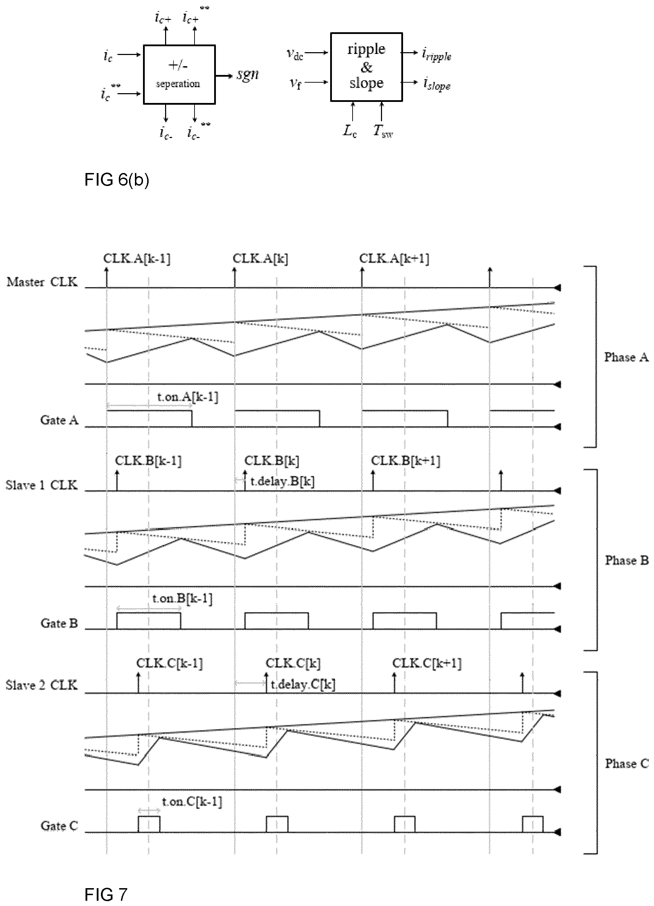

Figure 6(b) shows simplified blocks which provide for positive/negative separation based on the sign of the current refence and for calculation of current ripple and current slope. In the +/- separation the measured converter current $i_c$ is inputted together with current reference $i_c^{**}$. The outputs of the block are $i_{c+}$ and $i_{c+}^{**}$ when the current reference is positive, $i_{c-}$ and $i_{c-}^{**}$ when the current reference is negative and signal sgn which indicates whether the current reference is positive or negative. These values from the separation block are fed to the structure of Figure 6(a).

In the current ripple and current slope calculation block the inputs are the measured DC voltage $v_{DC}$, measured filter voltage $v_f$, value of converter-side inductance of the LCL filter and the switching period Tsw. The obtained $i_{ripple}$ and $i_{slope}$ are fed to the structure of Figure 6(a).

Basically, the input of the predictive peak current controller, $i_c^{**}$, is the reference for the average current. Therefore, it needs to be adjusted for a proper peak current reference $i_c^{***}$, as presented in (5), where $i_{ripple}$ is the predicted current ripple of the converter-side inductor $L_c$ of the LCL filter, D the predicted operating duty cycle, and $i_{slope,peak}$ the predicted peak value of the slope compensation for the next switching cycle. Then, $i_c^{***}$ is used for the conventional peak current control block. In conventional peak current control a turn off switching is triggered when the peak current reaches the reference and slope compensation is preferably added to avoid possible sub-oscillation of the current when operating duty cycle is above 50%.

$$i_c^{***} = i_c^{**} + \frac{i_{ripple}}{2} + Di_{slope,peak} \qquad (5)$$

Based on the two-level voltage source converter with a virtual ground connection shown in Figure 1, the predicted duty cycle D and the current ripple of the converter-side inductor $L_c$ are expressed as (6) and (7), respectively, assuming these values are changing slowly over the fundamental period. $T_s$ is the switching period.

$$D = \frac{1}{2}\left(\frac{v_f}{0.5v_{dc}} + 1\right) \qquad (6)$$

$$i_{ripple} = \frac{\left(0.5v_{dc} - v_f\right)DT_s}{L_c} \qquad (7)$$

For a stable operation of the peak current control, a slope compensation may be required. Typically, a half of the falling slope of $i_c$ $S_f$, which is expressed as (8), is used for the slope compensation. Thus, $i_{slope,peak}$ is expressed as in (9).

$$S_f = \frac{0.5v_{dc} - v_f}{L_c} \qquad (8)$$

$$i_{slope,peak} = \frac{S_f T_s}{2} \qquad (9)$$

As for the three-phase PWM, the high frequency harmonic spectrum is determined by the distribution of the active vectors and the zero vectors within one switching period. It is known that a good harmonic spectrum can be achieved when the centers of the three phase gate signal are aligned, which is the same as in the space vector modulation.

The turn-ON timing of the peak current control is determined by the clock signal, which also determines the switching frequency. In order to achieve the center-aligned gate signals, the time delay of the turn-ON clock, t.delay, is introduced as shown in Figure 7, which can be calculated based on the turn-ON duration of the previous gate signals as presented in (10).

$$t.\text{delay}.B[k] = \frac{t.on.A[k-1] - t.on.B[k-1]}{2} \qquad (10)$$

As shown in Figure 7, the gate signals for the switch components of the converter are center-aligned such that center points of the turn-ON gate signals or each phase are at the same time instant.

It will be obvious to a person skilled in the art that the inventive concept can be implemented in various ways. The invention and its embodiments are not limited to the examples described above but may vary within the scope of the claims.

**Claims**

1.   A three-phase voltage source converter with an output LCL filter, the converter comprising a current controller, which is adapted to receive for each phase a current reference i*, LCL filter capacitor voltage reference $v_f$*, measured output current i and measured LCL filter capacitor voltage $v_f$,
the current controller comprising a predictive peak current controller and a current reference generator, wherein the current reference generator is adapted to produce a modified current reference i** which is fed to the predictive peak current controller, and
the current reference generator comprising active damping controller which is adapted to produce an active damping current component based on the measured LCL filter capacitor voltage, the active damping current component being summed to the current reference i* to produce the modified current reference i**, wherein
the predictive peak current controller comprises a reference corrector adapted to form a peak current reference i*** and a peak current controller,
the reference corrector forming a peak current reference i*** based on the modified current reference i**, a predicted duty cycle D, predicted current ripple of the converter side inductor of the output LCL filter and a predicted peak value of the slope compensation for the next switching cycle,

the peak current controller being adapted to produce a gate signal for controlling the switches of the converter based on the predicted slope compensation for the next switching cycle, a clock signal, the peak current reference i*** and the measured output current.

2.  A three-phase voltage source converter according to claim 1, wherein the current reference generator comprises a harmonic compensator which is adapted to produce harmonic compensation current component based on the difference between current reference and measured current, harmonic compensation current component being also summed to the current reference i* to produce the modified current reference i**.

3.  A three-phase voltage source converter according to claim 1 or 2, wherein the current reference generator comprises a common mode voltage controller which is adapted to produce a current component for producing common mode voltage to the filter capacitor based on the difference between capacitor voltage reference and measured capacitor voltage, the current component being also summed to the current reference i* to produce the modified current reference i**.

4.  A three-phase voltage source converter according to claim 1, 2 or 3, wherein the predicted duty cycle is calculated based on measured capacitor voltage and measured DC voltage.

5.  A three-phase voltage source converter according to claim 4, wherein the predicted current ripple of the converter side inductor of the LCL filter is calculated based on measured DC voltage, measured capacitor voltage, predicted duty cycle of the converter, switching period of the converter, and the value of the converter side inductor.

6.  A three-phase voltage source converter according to any one of the previous claims 1 to 5, wherein the gate signal for the switch components of the converter are center-aligned such that center points of the turn-ON gate signals of each phase are at the same time instant.

FIG 1

FIG 2

FIG 3

FIG 4

FIG 5

FIG 6(a)

8

FIG 6(b)

FIG 7

**Europäisches Patentamt**
**European Patent Office**
**Office européen des brevets**

# EUROPEAN SEARCH REPORT

Application Number

EP 20 15 9781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/024064 A1 (KARIMI HOUSHANG [CA]; KARIMI GHARTEMANI MASOUD [US] ET AL.) 6 February 2020 (2020-02-06) * the whole document * | 1-6 | INV.<br>H02M1/32<br>H02M7/5387<br>H02M1/12 |
| A | US 9 570 970 B1 (EREN SUZAN [CA]; PAHLEVANINEZHAD MAJID [CA]; JAIN PRAVEEN [CA]) 14 February 2017 (2017-02-14) * the whole document * | 2 | |

TECHNICAL FIELDS
SEARCHED (IPC)

H02M

The present search report has been drawn up for all claims

| Place of search | Date of completion of the search | Examiner |
|---|---|---|
| The Hague | 31 August 2020 | van der Weiden, Ad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 9781

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2020

| Patent document cited in search report | | Publication date | Patent family member(s) | Publication date |
|---|---|---|---|---|
| WO 2020024064 | A1 | 06-02-2020 | NONE | |
| US 9570970 | B1 | 14-02-2017 | NONE | |

EPO FORM P0459

For more details about this annex : see Official Journal of the European Patent Office, No. 12/82